# EUROPEAN PATENT SPECIFICATION

(11) **EP 2 454 603 B1**
(45) Date of publication and mention of the grant of the patent: **19.04.2017**
(21) Application number: 10726615.7
(22) Date of filing: 27.05.2010
(51) Int. Cl.: G01S 3/36, H01Q 21/20, A63B 43/00, A63B 24/00

(54) **LOCATING DEVICE FOR LOCATING AN OBJECT, AND A SYSTEM OF A LOCATING DEVICE AND AN OBJECT**
ORTUNGSVORRICHTUNG ZUR ORTUNG EINES OBJEKTS UND SYSTEM AUS EINER ORTUNGSVORRICHTUNG UND EINEM OBJEKT
DISPOSITIF DE LOCALISATION PERMETTANT DE LOCALISER UN OBJET, ET SYSTÈME COMPOSÉ D UN DISPOSITIF DE LOCALISATION ET D UN OBJET

(30) Priority: 16.07.2009 NL 2003209
(43) Date of publication of application: 23.05.2012
(73) Proprietor: Prazza B.V., 1071 GW Amsterdam (NL)
(72) Inventor: VAN DRIEL, John, NL-4016 CV Kapel Avezaath Buren (NL)
(74) Representative: Nederlandsch Octrooibureau
(86) International application number: PCT/NL2010/050318
(87) International publication number: WO 2011/008082

(56) References cited:
- DE-A1- 3 436 104
- DE-A1- 3 732 762
- DE-A1- 10 336 124
- FR-A1- 2 675 267
- GB-A- 1 154 501
- US-A- 3 836 929
- US-A1- 2005 085 316

## Description

The invention relates to a locating device for locating an object, the locating device comprising a first directional receiver so as to receive a signal emitted by the object, the first directional receiver being directed with a first main axis in a first direction.

The invention also relates to a system of a locating device of the abovementioned type and of an object, wherein the locating device is transportable and can be carried by a user.

A locating device and system of the abovementioned type are generally known. A portable golf ball locator with a display for direction and range to a golf ball having a transponder is known from DE 3732762 A1. The locating device can be used so as to retrieve an object. The object may be an item of sports equipment, such as for example a golf ball. A transmitter can be provided in the golf ball. The transmitter can emit a signal which can be received by an antenna of the locating device. The golf ball can subsequently be located on the basis of properties of the signal.

The known device is primarily suitable for retrieving objects which are relatively close to the locating device. Thus, it is for example possible to retrieve golf balls which have landed in tall grass or bushes by bringing the locating device to within a few metres of the golf balls.

It is a drawback of the known device that the distance at which the object can be located is relatively short. It is therefore an object of the invention to provide a locating device allowing an object to be located from a relatively long distance in a relatively simple manner. It is also an object to increase the angular sensitivity of the locating device. It is a further object of the invention to provide a locating device allowing a relatively small object to be located in a precise manner from up to a long distance.
In order to achieve at least one of the objects set, the invention provides a locating device for locating an object, as defined in Claim 1. The locating device comprises a first directional receiver so as to receive the emitted signal. The directional receiver may be an antenna. The directional receiver is preferably sensitive to the reception of signals from substantially a specific area. This area is defined as the area in which the antenna gain has decreased by less than 3 dB with respect to the maximum antenna gain. The opening angle is the angle between the directions in which the antenna gain has decreased by 3 dB. The area can extend as a cone shape from the receiver, the top of the cone shape being located close to the receiver. The direction in which the directional receiver is most sensitive corresponds to the direction of the main axis of the directional receiver. The main axis can coincide with the axis of the cone. The angle between the axis and the envelope of the cone shape is equal to half the opening angle. The directional receiver is placed in the locating device in such a way that the main axis is directed in a first direction. The locating device comprises a second directional receiver and a third directional receiver. The second and third directional receivers may also be antennas. These receivers are also preferably sensitive to the reception of signals from substantially one specific direction. The locating device can furthermore be provided with a processing unit so as to process the signals received by the at least three directional receivers. The locating device can be configured so as to obtain a location property of the object. The location property may for example be the direction, or the distance of the object with respect to the locating device.

Preferably, the opening angles of the second and third directional receivers overlap at least partially with an opening angle of the first directional receiver. The sensitive areas of the three directional antennas in this way overlap one another at least partially. The overlapping of the opening angles ensures that the locating device displays high sensitivity over a fairly large area. The high sensitivity of the locating device, and the relatively large area in which the locating device is sensitive, ensures that location properties of the object can be obtained up to a relatively long distance, in such a way that the object can be located in a relatively simple manner and use is made of a priori knowledge of the probable direction of the object.

In one embodiment of the locating device, the second and third main axes lie perpendicularly to the direction of the first main axis. This configuration can be implemented in a simple manner by positioning the directional receivers at the sides of a rectangular construction.

In a further embodiment of the locating device, the second main axis of the second directional receiver lies in an opposite direction with respect to the third main axis of the third directional receiver. In this configuration, the area is optimized with relatively high sensitivity, the sensitivity being lower in the direction of a user who is holding the locating device for use.

In one embodiment, at least one of the directional receivers has an opening angle which is less than 120°. The opening angle may be less than 120°, but smaller angles are also conceivable. It has been found that an opening angle of this type offers a suitable combination of relatively high sensitivity and a relatively large sensitivity area. The receiver is sufficiently sensitive to be able to receive a signal from up to a relatively long distance. However, the opening angle is preferably selected so as not to be too small. In such a case, the angular sensitivity is not excessively limited, so that signals can be received over a relatively large angular area.

It is possible for the location property to comprise the direction. It is also possible for the location property to comprise the relative distance. Other location properties are conceivable.

It is possible for information about the location of the object to be tied up in the signal. However, the information about the location of the object can also be determined based on differences in the intensity of the received signal between the various directional receivers. In a particularly advantageous embodiment, each of the three directional receivers is connected to an intensity transducer. This intensity transducer or intensity sensor is configured so as to ascertain the intensity of the signal which has been received by the directional receiver connected thereto. The processing unit further comprises a location determining unit connected to the intensity transducers for determining the location property of the object on the basis of one or more intensities of the intensity transducers. It is for example possible to calculate on the basis of the various intensities and algorithms from which direction, and from which relative position, a signal originates. Alternatively, a comparison matrix can be used. Data about the relationship between the direction of the signal and the relative intensities thereby measured of the directional receivers are processed in the comparison matrix. The comparison matrix can thus be compiled on the basis of a calibration test. Data about the distance from the object can also be included in the comparison matrix. If the transmitters are configured in such a way as to be able to emit a signal having a consistent intensity, the distance from the object can also be calculated and/or determined on the basis of the intensity of the incoming signal.

Preferably, the locating device is selectively adjustable so as to selectively receive a signal. If a number of objects are used, then the locating device can be set to receive a signal from a specific object. Thus, the reception unit can distinguish between which object has to be located. It is also possible for the locating device to be made alternately selective for determining the position of a number of objects. In this way, just one locating device can be used to locate a number of objects.

In one embodiment, the processing unit is connected to a readout device so as to show the location property of the object to a user. A readout device of this type may for example be an electronic screen on which, for example, the direction from which the signal from the object originates is indicated. The distance from the object up to the locating device can also be shown.

Alternatively or additionally to the readout device, it is possible to use a sound signal. The signal can give an indication of the direction, for example by increasing the frequency of a signal as the locating device is held in the direction of the object. Other equivalent embodiments are of course also conceivable.

In one embodiment, the locating device comprises a position-determining element for determining a geographical location of the locating device. This position-determining element can for example comprise a GPS receiver. This can for example be used to determine the position of, for example, the golfer carrying the locating device on the golf course.

In one embodiment, the processing unit is connected to a readout device so as to show the position of the locating device. This allows the position of both the golfer and the golf ball, for example, to be shown on the readout device, optionally supplemented with a plan of the golf course. According to one aspect of the invention, the invention provides a system of a locating device and at least one object, as defined in Claim 7.

The locating device is preferably a locating device according to one embodiment of the invention, as described hereinbefore. The locating device is preferably transportable and can be carried by a user. The object can be provided with an electric circuit. The circuit comprises a transmitting element which can be connected to a power supply element so as to emit a signal. The power supply element may be a battery or the like. The locating device is configured so as to receive the signal emitted by the object.

The transmitting element can be configured to send an electromagnetic signal wirelessly (i.e. via the ether). In a specific embodiment, the golf ball emits a signal in the 2.4 GHz waveband. This waveband is free to emit in. In addition, a signal emitted in this waveband has the advantage that objects cannot or can hardly block the signal. For example, the signal can be emitted effectively through tall grass, bushes and/or trees.

It is possible for the electric circuit to comprise a modulation unit so as to process one or more items of data in the signal emitted by the transmitting element. The modulation unit may be a microprocessor. The signal can be modulated. The modulating can take place in analogue or digital form. It is however also possible to send one or more items of data in conjunction with the signal in a different manner. The processing unit of the locating device is configured so as to obtain the one or more items of data processed in the signal.

In one embodiment, the object comprises a position-determining element connected to the modulation unit so as to determine a position of the object. The object can in this case be configured to emit data about the specific position of the object with the signal. The position-determining element may for example be a GPS sensor or an acceleration meter. The position-determining element can be used to jointly send a first estimate to the locating device. The locating device can use the data from the position-determining element to precisely determine the exact position of the object. It is also possible for these data to be additionally used and for the intensity measurement, for example, also to be used for determining the position of the object. Location properties of the object can also be determined with the aid of the acceleration meter and a "dead reckoning" method.

It is possible for the data to comprise an identification code unique to the object. The locating device is in this case preferably selectively adjustable for processing the signal comprising the unique identification code. In this way, it is possible to direct the receiver specifically to one object. This prevents interference from remaining signals, such as for example from other objects.

Preferably, the system is configured to operate with spread spectrum communication. In spread spectrum communication, the energy from the emitted signal is deliberately spread over a specific frequency domain. Spread signals of this type have a much greater bandwidth than the information which they contain. This produces a noise-like signal which is unlikely to be disturbed by another signal. On use of a number of locating devices and/or a number of objects provided with transmitters, it will be possible to continue monitoring each object precisely. Spread spectrum communication ensures that the signal is highly reliable.

In one embodiment, the system comprises at least a second object. The second object is also provided with an electric circuit. The electric circuit comprises a transmitting element which can be connected to a power supply element so as to emit a second signal. The locating device is configured so as to receive the second signal emitted by the at least second object, and also so as to obtain a location property of the second object. In this way, just one locating device can be used to monitor and locate a number of objects. The locating device can for example represent the location properties of the two or more objects simultaneously, with two or more different signals. It is also possible for the locating device to alternately represent the location properties of the various objects.

In order to spare the power supply element of the object still further, the circuit can be configured for emitting the signal with an interval. This also ensures that a relatively powerful signal can be emitted that can be measured at a greater distance.

The interval can be for between 1 and 10 seconds. The interval is preferably equal to about 2 seconds.

Preferably, the object is a golf ball. Golf balls with transmitters are known. However, it has been found that the detectability of the existing golf ball is relatively poor. For example, the distance at which the ball is detectable may be relatively short, for example a few metres or tens of metres. It may be the case that a user has no idea where his ball has roughly landed after he has hit it. Because the distance of detection is relatively short, this may make it more difficult, or even impossible, for the user to retrieve his ball. The system according to the invention allows the ball to be detected from up to a relatively long distance. In ideal conditions, the object can be detected and located from up to 300 metres. Obstacles between the object and the locating device can reduce the maximum distance. In a specific use, namely on use in a golf ball, the casing of the golf ball ensures a reduction in the signal, and thus a reduced maximum distance at which the golf ball can be located. However, the signal is sufficiently strong to be detected, in combination with the locating device according to the invention, at distances of on average about 100 - 150 metres; this is not possible with the currently known devices. And distances of 80 metres can be achieved even under relatively poor conditions.

Preferably, the electric circuit of the object, such as the golf ball, further comprises a switching element for activating or deactivating the circuit, which switching element comprises a motion sensor for detecting a movement of the object, and the switching element being configured to activate the circuit on detection of movement of the object for causing the transmitting element to emit a signal, and to deactivate the circuit after a specific period of time after activation in order to spare the power supply element. In this way, the power supply of the object is spared and a relatively powerful signal can be emitted by the object; this increases the distance at which the signal can be perceived. A system of this type can also be used in objects other than a golf ball.

In one embodiment, the motion sensor comprises a force transducer and/or an impact detector so as to detect a strike on the golf ball. The force transducer and/or impact detector detects a strike on the golf ball, such as for example occurs when hitting the ball away or when bouncing the ball.

Preferably, the switching element is configured to activate the circuit when the force transducer and/or impact detector detect(s) a force or impact respectively that exceeds a preset minimum value. The minimum force or impact can be somewhat less than the force or impact which occurs when the ball is hit away using a club. The forces/impulses which occur when the ball is hit away are relatively high and characteristic of said strike, and therefore relatively simple to distinguish from other forces/impulses which can be exerted on the ball. As a result, it is relatively simple to distinguish between a movement/impact which should activate the circuit and a movement/impact which should not activate the circuit. For example, it is undesirable for the circuit to be activated while the ball is being transported. By configuring the impact detector in such a way that the impact detector delivers a signal when a minimum impact is detected, the circuit can be activated when the ball is hit away. This will spare the power supply because the circuit is not activated in other situations. Preferably, a relatively short period of time is adhered to after activation, after which the switching element deactivates the circuit again. The period of time after activation may be between 5 and 60 minutes and is more preferably equal to about 20 minutes.

A few embodiments of the invention will be explained hereinafter in greater detail with reference to a few figures, in which:
Fig. 1 is a reception diagram of an embodiment of a directional receiver;
Fig. 2 is a schematic overview of an embodiment of a locating device;
Fig. 3 is a schematic overview of the positioning of directional receivers;
Fig. 4 is a schematic overview of an object provided with a transmitter;
Fig. 5 is a schematic overview of a readout device showing the positions of respectively the locating device, the object and a plan of the golf course; and
Fig. 6 is a schematic overview of an embodiment of an antenna unit comprising three antennas.

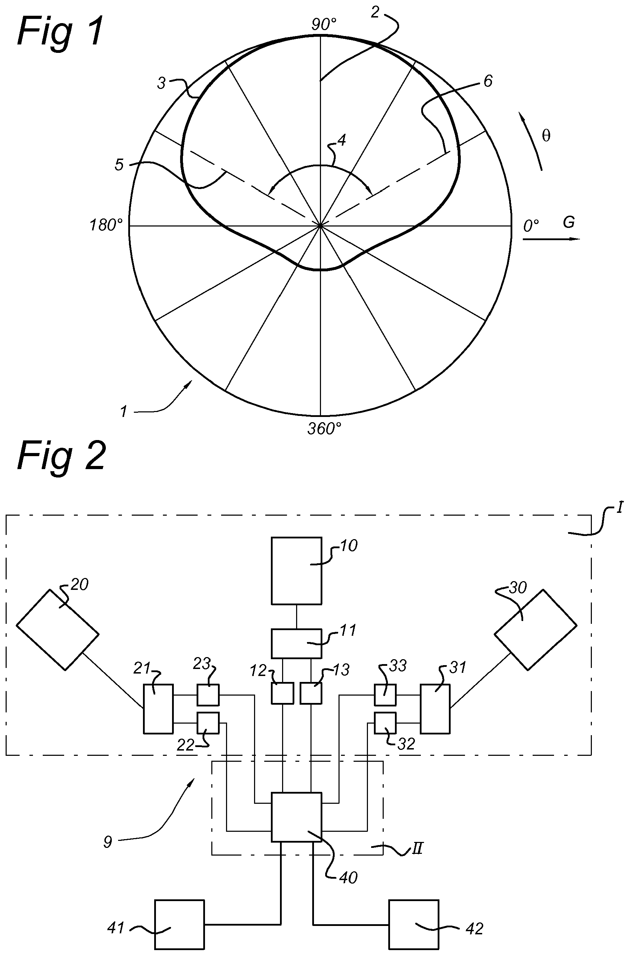

Fig. 1 is a radiation diagram 1 of an embodiment of a directional receiver. The directional receiver may for example be an antenna. The radiation diagram of the receiver shows how sensitive the receiver is to signals from a broad range of directions. The diagram shows the antenna gain G as a function of the angular coordinate θ with the aid of the radiation line 3. The diagram shows the antenna gain G in a logarithmic scale. The antenna gain is represented schematically and serves merely for the purposes of illustration. The radiation line 3 forms a curve in the diagram. The further the radiation line 3 is from the centre of the radiation diagram, the greater is the sensitivity of the receiver. The receiver is most sensitive in the direction of the main axis 2. In the diagram shown, the main axis is directed toward 90°. The diagram shows that sensitivity decreases as the direction from which the signal to be received comes moves away from the main axis. Thus, the directional receiver is for example most insensitive to signals coming from the back of the receiver (180 - 270°, 270 - 0°). With respect to the maximum value of the radiation line (high sensitivity, at 90°), the sensitivity decreases as the angle increases and decreases. At a given moment, the sensitivity is merely about 50% of the maximum value. The associated angle θ is indicated by lines 5 and 6. These lines, 5, 6 indicate the legs of the opening angle, that is to say the angle between the directions in which the antenna gain has decreased by 3 dB. The opening angle is therefore a measure of the sensitivity of the directional receiver.

Fig. 2 shows a locating device 9 for locating an object. The locating device comprises a reception unit I and a processing unit II. The reception unit I is configured so as to receive a signal emitted by the object. The reception unit comprises three directional receivers 10, 20, 30. The first directional receiver 10 can be connected to a preprocessor 11. The preprocessor ensures that the signal received by the receiver is preprocessed in such a way that it can continue to be used in the locating device. The preprocessor can for example boost and filter the signal. The preprocessor 11 can forward the signal to a second reception processor 12. The preprocessor 11 can also be connected to an intensity transducer 13. The intensity transducer is configured for ascertaining the intensity of the signal that is received by the first directional receiver 10. The preprocessor 11 and the intensity transducer 13 of the first directional receiver 10 are further connected to a control unit 40 in the processing unit.

In addition, the locating device also comprises a second and a third directional receiver 20, 30. The second directional receiver 20 can be connected to the control unit 40 in the processing unit via a preprocessor 21, and a second reception processor 22 and a second intensity transducer 23. The same applies to the third directional receiver 30 which can also be connected to the control unit 40 in the processing unit via a preprocessor 31, and a second reception processor 32 and a second intensity transducer 33.

The control unit 40 can thus receive signals from the three directional receivers 10, 20, 30. The processing unit II processes these signals for obtaining a location property of the object, as will be explained hereinafter in greater detail.

The control unit 40 can be connected to a readout device 41. The readout device 41 can show the location property of the object to the user. It is for example possible to indicate the direction of the object on a screen with the aid of arrows. It is also possible to show the distance from the device to the object. Other data can of course also be shown. Thus, it is for example also possible to show a plan or sketch of the surroundings, showing the location of the user and the location of the object to be monitored.

For this purpose, the location device 9 contains in one embodiment a position-determining element 42, for example a GPS receiver, which is connected to the control unit 40 for determining a position of the locating device.

The locating device 9 can be connected in a known manner to a power supply (not shown). The power supply may for example be mains current. However, the power supply used is preferably an accumulator or a battery. This allows a user to take the locating device with him and the locating device to be used independently of the mains.

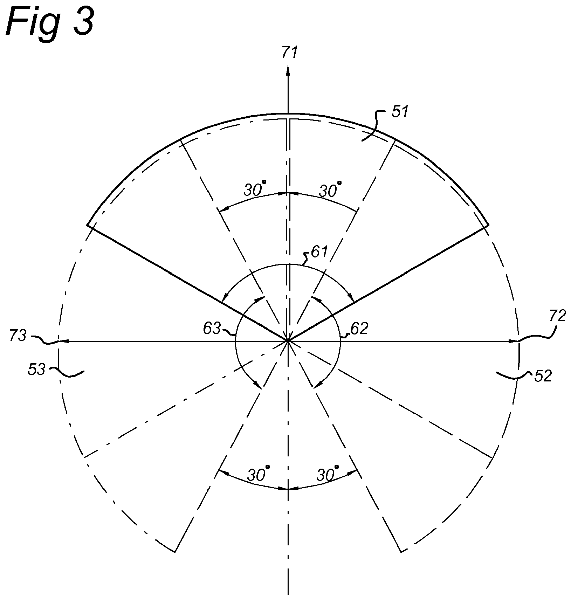

In order to increase the accuracy and the maximum receiver distance of the locating device, it is preferable to position the three directional receivers 10, 20, 30 with their main axes at an angle unequal to zero with respect to one another. Fig. 3 shows an embodiment of the positioning of the three directional receivers. The figure shows the sensitive areas 51, 52, 53 and the most sensitive directions 71, 72, 73 of the first, second and third directional receivers respectively.

The first directional receiver is directed with a main axis 71 toward the top of the figure. The first directional receiver has an opening angle 61 of about 120°. The corresponding sensitive area 51 is indicated in the figure. The second directional receiver is positioned in this embodiment in such a way that a main axis 72 lies transversely, preferably perpendicularly to the main axis 71 of the first directional receiver. In the embodiment shown, the second directional receiver also has an opening angle of 120°. The third directional receiver is positioned in such a way that a main axis 73 thereof lies transversely, preferably perpendicularly, to the main axis 71 of the first directional receiver and preferably lies in an opposite direction with respect to the direction of the main axis 72 of the second directional receiver. In this embodiment, the third directional receiver also has an opening angle of 120°. The sensitive areas 52, 53 of the second and third directional receivers overlap at least partially with the sensitive area 51 of the first directional receiver. In other words, the opening angles 62, 63 of the second and third directional receivers overlap at least partially with the opening angle 61 of the first directional receiver.

In the embodiment shown, the sensitive area 51 of the first directional receiver is partially covered by the sensitive areas 52, 53 of the second and third receivers. This means that in the case of an incoming signal from the direction of the main axis 71 of the first directional receiver, in each case two receivers can receive the signal: either the first and the second receiver or the first and the third receiver. The combination of the two signals can be used for determining the direction and the distance of the object precisely and at a long distance. If just one receiver receives a signal, then it is necessary to deduce what direction this signal is coming from, and instructions can be given to a user as to how the locating device can be directed with greater precision.

It will be clear to the person skilled in the art that other opening angles are also possible for the directional receivers. Thus, it is possible to select an opening angle of less than 120°. A smaller opening angle can increase the distance at which it is possible to measure, as the antenna gain increases as the opening angle decreases. However, the smaller opening angle restricts the total area in which the locating device can receive a signal; this may be undesirable. The directional receivers should also be aligned more precisely. In certain cases, an embodiment of this type may be advantageous, in particular when objects have to be located from up to a long distance. In such a case, it is of course possible to use more directional antennas having a smaller opening angle. Thus, one embodiment provides 5 directional antennas having an opening angle of 60°. Other numbers of opening angles are also conceivable. In most cases, an embodiment with three directional antennas and an opening angle of about 120° will lead to excellent results as far as accuracy and measurable distance are concerned.

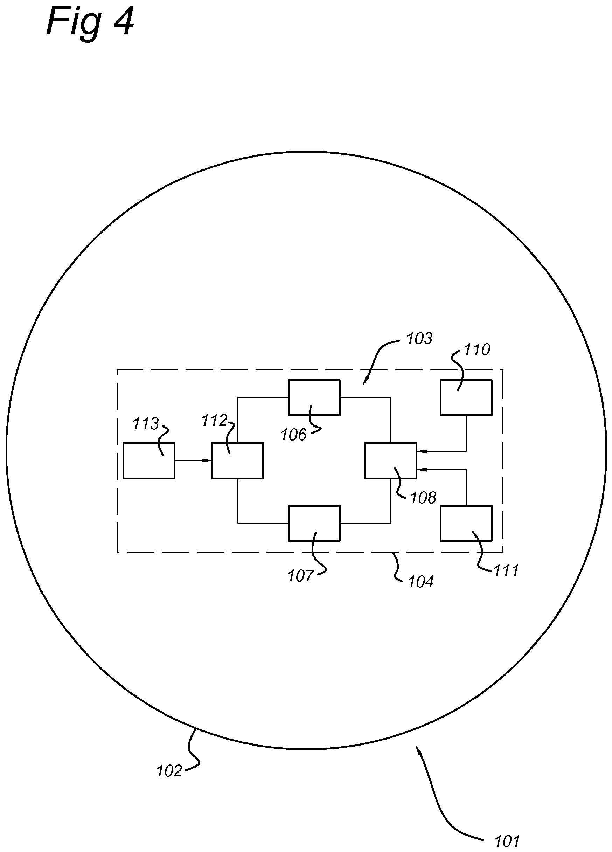

Figure 4 is a schematic overview of an object 101 which is provided with a transmitter. The object 101 can form a locating system together with an above-described locating device. The object 1 comprises a housing 102 in which an electric circuit 103 is accommodated. The circuit 103 can be part of a transponder, such as for example an active radio transponder (such as RFID). The electric circuit 103 comprises a power supply element 106 which is connected to a transmitting element 107. The power supply element 106 may be a relatively small button cell battery. The transmitting element 107 can be embodied in a manner known to the person skilled in the art. The transmitting element 107 can emit a signal. The locating device is configured so as to receive the signal emitted by the object. The signal may be in the 2.4 GHz waveband.

A processing unit 112 can also be accommodated in the circuit 103. The processing unit 112 can be used so as to adapt the signal emitted by the transmitting element 107. The purpose of the adapting of the signal may be to send one or more items of data together with the signal, such as for example a unique identification code for the object. The processing unit 112 may for example be a microprocessor. In this way, a large number of objects can be precisely monitored and located with the aid of just one locating device.

A position-determining element 113 can be connected to the processing unit 112. The position-determining element is used to determine a position property or location property of the object 101. The processing unit 112 receives a signal generated by the position-determining element. The signal can be processed by the processing unit 112 in order to send this signal together with the signal sent by the transmitting element. Optionally, the processing unit 112 can release one or more operations on the signal from the position-determining element 113 in order in this way to calculate a position property or location property of the object. The position-determining element can enable the object to itself determine its position. The fact that the position of the object in the golf ball is self-determined allows the object to be located in a relatively simple and precise manner.

The position-determining element 113 may for example be a GPS receiver allowing a site to be determined relatively accurately. GPS also allows the location of the object to be represented relatively precisely on a readout device of the locating device. It is also possible to incorporate in the locating device data from the field in which the object is to be located. Thus, these data, such as for example course data from a golf course, can be shown at the same time as the data of the position of the object, such as a golf ball, and the position of the user.

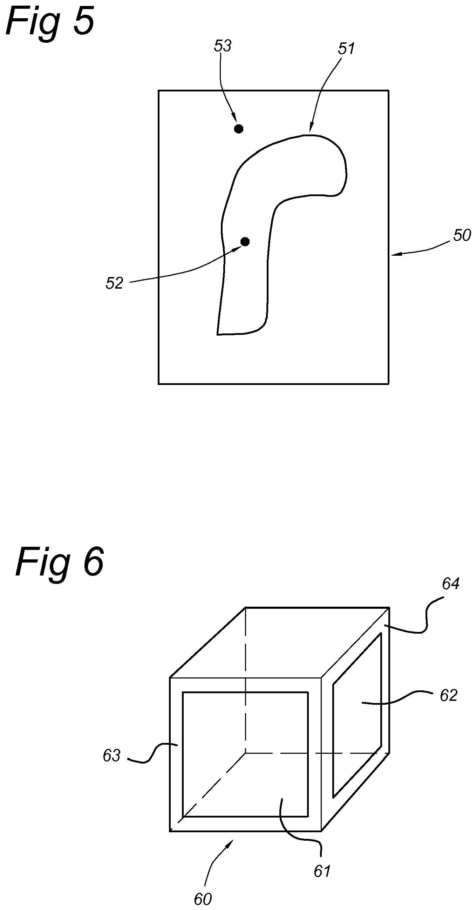

Fig. 5 shows an embodiment of a readout device 50 showing by way of example: a plan of a golf course 52 with a specific position 52 of the locating device and a specific position 53 of a golf ball.

The signal can be received by the locating device and the data processed in the signal can be shown to the user. The signal has merely to be received in order to be able to subsequently locate the object. The positioning of the three directional receivers ensures that the signal can be received at a relatively long distance, allowing the object to be located precisely and from up to a long distance. Signals from a large number of objects can also be received, and the position of these objects can be determined by the locating device independently of one another.

It is of course possible to not provide the object with a position-determining element. The locating device can then still obtain a location property of the object. The differences in intensity between the various directional antennas can for example be used for this purpose. It is for example possible to calculate the direction from which a signal originates on the basis of the various intensities and algorithms. Alternatively, a comparison matrix can be used. Data about the relationship between the direction of the signal and the relative intensities thereby measured of the directional receivers are processed in the comparison matrix. The comparison matrix can thus be compiled on the basis of a calibration test. Data about the distance from the object can also be included in the comparison matrix. If the transmitter can emit from the object a signal having a consistent intensity, the distance from the object can also be calculated and/or determined on the basis of the intensity of the incoming signal.

In an advantageous embodiment, the object is a golf ball. The golf ball is relatively small, and the electric circuit can be adapted for use in the golf ball. Thus, the electric circuit should be able to withstand high forces and impulses. Because the golf ball is relatively small, and the circuit has to fit therein, measures should also be taken to ensure the strength of the emitted signal. For this purpose, a switching element 108 can be accommodated in the electric circuit 103. The switching element 108 is configured so as to alternately activate the circuit 103 so as to emit a signal, and also so as to deactivate the circuit 103 for sparing the power supply element 106. The switching element can comprise a motion sensor 111 for detecting a movement of the golf ball 101. The motion sensor 111 may be an impact detector. Other sensors are also conceivable without thereby departing from the idea of the invention. The switching element 108 can be configured to activate the circuit 103 in the event of a signal from the motion sensor 111. The switching element 108 can also be configured to deactivate the circuit after a specific period of time after activation. The term "deactivating" refers to influencing the circuit 103 in such a way that the power supply element 106 is spared. It is for example possible to completely switch off the circuit. In that case, no further demands whatsoever will be made on the power supply. It is also possible for the circuit to be placed on standby. In standby mode, it is for example possible to monitor signals from the motion sensor in such a way as to allow rapid activation of the circuit 103. The amount of power consumed in standby mode (for example 1 uA) may be much less than the amount of power consumed in the activated state.

It is possible to connect a transponder 110 to the switching element 108. The transponder 110 may be a passive transponder. The transponder 110 can be configured to activate the switching element 108 if the ball 101 does not move. It is for example possible to send to the ball 101 a signal which is received by the transponder 110, after which the switching element 108 activates the circuit 103. This makes it possible to activate the circuit 103, irrespective of the fact that a movement has been detected. This is advantageous if the golf ball 101 has been stationary for a long time and has therefore been deactivated. The golf ball can then still be activated remotely in order to locate the golf ball. On the other hand, it is of course also possible to deactivate the ball in a similar manner using an external signal.

The foregoing adaptations aimed at the golf ball can of course also be provided in objects other than golf balls. The person skilled in the art will recognize in which situations and for which objects this may be advantageous.

It is possible for the electric circuit 103 and the remaining components, such as for example the motion sensor 111 and the acceleration sensor 113, to be provided on a PCB (printed circuit board). The PCB and the components then form a PCB assembly (PCBA). The PCB and/or the PCBA and also the resilient core have the same density as the material of which the golf ball is normally made. This means that the golf ball is not heavier than a standard golf ball. The golf ball can thus meet official requirements for golf balls, such as for example competition requirements. This makes the golf ball suitable for use in official competitions.

The locating device is preferably transportable and can be carried by a user. The use of the directional receivers, and the specific positioning thereof, allows the locating device to be embodied in a relatively compact and light manner. This allows the locating device to be made the size of a mobile telephone. Specific dimensions are about 6 x 10 cm. Smaller embodiments are also conceivable by using smaller directional antennas.

In a compact and light embodiment of this type, the locating device can be used in a golf accessory.

Fig. 6 shows an embodiment of an antenna unit 60 in which flat directional antennas 61, 62, 63 are positioned on the walls of a rectangular box construction 64. Optionally, the antennas 61, 62 and 63 can be provided with a protective layer.

It will be clear to the person skilled in the art that various equivalent embodiments are possible. The present invention is not limited to the embodiment described in the present document.

## Claims

1. Portable locating device (9) for locating an object provided with a transmitter for emitting a signal, the locating device comprising
a first directional receiver (10) configured to receive the emitted signal and to convert the received signal in a first electrical signal, the first directional receiver being directed with a first main axis (71) in a first direction, **characterized in that**
the locating device further comprises
a second directional receiver (20) with a second main axis (72) configured to receive the emitted signal and to convert the received signal in a second electrical signal, ,
a third directional receiver (30) with a third main axis (73) configured to receive the emitted signal and to convert the received signal in a third electrical signal,
and a processing unit (40) configured to process the first, second and third signals received by the three directional receivers so as to obtain a location property of the object, wherein the second and third directional receivers are positioned in such a way that their respective main axes (72,73) lie transversely to the first direction,
wherein the opening angles of the second and third directional receivers at least partially overlap with an opening angle of the first directional receiver and wherein the second and the third main axes (72,73) of the second and the third directional receivers respectively lie perpendicularly to the first main axis (71) of the first directional receiver.

2. Portable locating device according to Claim 1, wherein the second main axis of the second directional receiver lies in an opposite direction with respect to the third main axis of the third directional receiver.

3. Portable locating device according to one of the preceding claims, wherein each of the three directional receivers is connected to an intensity transducer,
each intensity transducer being configured so as to ascertain the intensity of the signal received by the directional receiver connected thereto, and the processing unit comprising a location determining unit connected to the intensity transducers for determining the location property of the object on the basis of one or more intensities of the intensity transducers.

4. Portable locating device according to one of the preceding claims, wherein the processing unit is connected to a readout device so as to show the location property of the object to a user.

5. Portable locating device according to one of the preceding claims, wherein the location property comprises the direction, and/or wherein the location property comprises the relative distance.

6. Portable locating device according to one of the preceding claims, wherein the locating device comprises a position-determining element for determining a position of the locating device.

7. System of a portable locating device according to one of the preceding claims, and of an object, wherein the object is provided with an electric circuit, comprising a transmitting element which can be connected to a power supply element so as to emit a signal, the locating device being configured so as to receive the signal emitted by the object.

8. System according to Claim 7, wherein the electric circuit comprises a modulation unit so as to process one or more items of data in the signal emitted by the transmitting element, and wherein the processing unit of the portable locating device is configured for deducing from a received signal one or more of the items of data processed in the signal.

9. System according to Claim 8, wherein the object comprises a position determining element connected to the modulation unit so as to determine a position of the object, the object being configured to emit data about the determined position of the object with the signal.

10. System according to Claim 8 or 9, wherein the data comprise an identification code unique to the object, and wherein the portable locating device is selectively adjustable for processing the signal comprising the unique identification code.

11. System according to one of the preceding Claims 8 - 10, wherein the system comprises at least a second object which is provided with an electric circuit, comprising a transmitting element which can be connected to a power supply element so as to emit a second signal, the portable locating device being configured so as to receive the second signal emitted by the at least second object, and also so as to obtain a location property of the second object.

12. System according to one of the preceding Claims 8 - 11, wherein the object is a golf ball and the electric circuit further comprises a switching element for activating or deactivating the circuit, which switching element comprises a motion sensor for detecting a movement of the golf ball, and wherein the switching element is configured to activate the circuit on detection of movement of the golf ball for causing the transmitting element to emit a signal, and to deactivate the circuit after a specific period of time after activation in order to spare the power supply element.

13. System according to Claim 12, wherein the motion sensor comprises a force transducer and/or an impact detector so as to detect a strike on the golf ball.

## Patentansprüche

1. Tragbare Ortungsvorrichtung (9) zur Ortung eines Objekts, das mit einem Sender zum Aussenden eines Signals versehen ist, wobei die Ortungsvorrichtung einen ersten Richtempfänger (10) umfasst, der dazu ausgelegt ist, das ausgesendete Signal zu empfangen und das empfangene Signal in ein erstes elektrisches Signal umzuwandeln, wobei der erste Richtempfänger mit einer ersten Hauptachse (71) in einer ersten Richtung ausgerichtet ist, **dadurch gekennzeichnet, dass** die Ortungsvorrichtung weiterhin umfasst: einen zweiten Richtempfänger (20) mit einer zweiten Hauptachse (72), der dazu ausgelegt ist, das ausgesendete Signal zu empfangen und das empfangene Signal in ein zweites elektrisches Signal umzuwandeln, einen dritten Richtempfänger (30) mit einer dritten Hauptachse (73), der dazu ausgelegt ist, das ausgesendete Signal zu empfangen und das empfangene Signal in ein drittes elektrisches Signal umzuwandeln, und eine Verarbeitungseinheit (40), die dazu ausgelegt ist, das erste, zweite und dritte Signal, die durch die drei Richtempfänger empfangen werden, zu verarbeiten, um eine Positionseigenschaft des Objekts zu erhalten, wobei der zweite und dritte Richtempfänger derart positioniert sind, dass ihre entsprechenden Hauptachsen (72, 73) quer zu der ersten Richtung liegen, wobei sich die Öffnungswinkel des zweiten und dritten Richtempfängers wenigstens teilweise mit einem Öffnungswinkel des ersten Richtempfängers überlappen und wobei die zweite und die dritte Hauptachse (72, 73) des zweiten und dritten Richtempfängers entsprechend rechtwinklig zu der ersten Hauptachse (71) des ersten Richtempfängers liegen.

2. Tragbare Ortungsvorrichtung nach Anspruch 1, wobei die zweite Hauptachse des zweiten Richtempfängers, mit Bezug auf die dritte Hauptachse des dritten Richtempfängers, in einer entgegengesetzten Richtung liegt.

3. Tragbare Ortungsvorrichtung nach einem der vorangehenden Ansprüche, wobei jeder der drei Richtempfänger mit einem Intensitätsaufnehmer verbunden ist, wobei jeder Intensitätsaufnehmer dazu ausgelegt ist, die Intensität des Signals zu ermitteln, das durch den damit verbundenen Richtempfänger empfangen wird, und die Verarbeitungseinheit eine mit den Intensitätsaufnehmern verbundene Positionsbestimmungseinheit zum Bestimmen der Positionseigenschaft des Objekts auf der Grundlage einer oder mehrerer Intensität(en) der Intensitätsaufnehmer umfasst.

4. Tragbare Ortungsvorrichtung nach einem der vorangehenden Ansprüche, wobei die Verarbeitungseinheit mit einer Auslesevorrichtung verbunden ist, um die Positionseigenschaft des Objekts einem Benutzer zu zeigen.

5. Tragbare Ortungsvorrichtung nach einem der vorangehenden Ansprüche, wobei die Positionseigenschaft die Richtung umfasst und/oder wobei die Positionseigenschaft die relative Entfernung umfasst.

6. Tragbare Ortungsvorrichtung nach einem der vorangehenden Ansprüche, wobei die Ortungsvorrichtung ein Positionsbestimmungselement zum Bestimmen einer Position der Ortungsvorrichtung umfasst.

7. System aus einer tragbaren Ortungsvorrichtung nach einem der vorangehenden Ansprüche und einem Objekt, wobei das Objekt mit einem Stromkreis versehen ist, der ein Sendeelement umfasst, das mit einem Energieversorgungselement verbunden sein kann, um ein Signal auszusenden, wobei die Ortungsvorrichtung dazu ausgelegt ist, das durch das Objekt ausgesendete Signal zu empfangen.

8. System nach Anspruch 7, wobei der Stromkreis eine Modulationseinheit umfasst, um ein oder mehrere Daten in dem durch das Sendeelement ausgesendeten Signal zu verarbeiten, und wobei die Verarbeitungseinheit der tragbaren Ortungsvorrichtung dazu ausgelegt ist, von einem empfangenen Signal auf ein oder mehrere der verarbeiteten Daten in dem Signal zu schließen.

9. System nach Anspruch 8, wobei das Objekt ein Positionsbestimmungselement umfasst, das mit der Modulationseinheit verbunden ist, um eine Position des Objekts zu bestimmen, wobei das Objekt dazu ausgelegt ist, mit dem Signal Daten über die bestimmte Position des Objekts auszusenden.

10. System nach Anspruch 8 oder 9, wobei die Daten einen einmaligen Identifizierungscode des Objekts umfassen und wobei die tragbare Ortungsvorrichtung zum Verarbeiten des Signals, das den einmaligen Identifizierungscode umfasst, selektiv einstellbar ist.

11. System nach einem der vorangehenden Ansprüche 8-10, wobei das System wenigstens ein zweites Objekt umfasst, das mit einem Stromkreis versehen ist, der ein Sendeelement umfasst, das mit einem Energieversorgungselement verbunden sein kann, um ein zweites Signal auszusenden, wobei die tragbare Ortungsvorrichtung dazu ausgelegt ist, das durch das wenigstens zweite Objekt ausgesendete zweite Signal zu empfangen, und auch dazu, eine Positionseigenschaft des zweiten Objekts zu erhalten.

12. System nach einem der vorangehenden Ansprüche 8-11, wobei das Objekt ein Golfball ist und der Stromkreis weiterhin ein Schaltelement zum Aktivieren oder Deaktivieren des Kreises umfasst, wobei das Schaltelement einen Bewegungssensor zum Erkennen einer Bewegung des Golfballs umfasst und wobei das Schaltelement dazu ausgelegt ist, den Kreis bei einer Erkennung einer Bewegung des Golfballs zu aktivieren, um zu bewirken, dass das Sendeelement ein Signal aussendet, und den Kreis nach einem spezifischen Zeitraum zu deaktivieren, um das Energieversorgungselement zu entlasten.

13. System nach Anspruch 12, wobei der Bewegungssensor einen Kraftaufnehmer und/oder einen Aufpralldetektor umfasst, um einen Schlag auf den Golfball zu erkennen.

## Revendications

1. Dispositif portable de localisation (9) pour localiser un objet équipé d'un émetteur pour émettre un signal, le dispositif de localisation comprenant un premier récepteur directionnel (10) configuré pour
recevoir le signal émis et convertir le signal reçu en un premier signal électrique, le premier récepteur directionnel étant dirigé avec un premier axe principal (71) dans une première direction, **caractérisé en ce que**
le dispositif de localisation comprend, en outre, un deuxième récepteur directionnel (20) avec un second axe principal (72) configuré pour
recevoir le signal émis et convertir le signal reçu en un deuxième signal électrique, un troisième récepteur directionnel (30) avec un troisième axe principal (73) configuré pour
recevoir le signal émis et convertir le signal reçu en un troisième signal électrique, et
une unité de traitement (40) configurée pour traiter les premier, deuxième et troisième signaux reçus par les trois récepteurs directionnels, de manière à obtenir une propriété de localisation de l'objet, dans laquelle les deuxième et troisième récepteurs sont positionnés de manière que leur axe principal respectif (72, 73) soit situé transversalement à la première direction,
dans laquelle les angles d'ouverture des deuxième et troisième récepteurs directionnels chevauchent au moins partiellement un angle d'ouverture du premier récepteur directionnel, et
dans laquelle les deuxième et troisième axes principaux (72, 73) des deuxième et troisième récepteurs directionnels se trouvent respectivement perpendiculaires au premier axe principal (71) du premier récepteur directionnel.

2. Dispositif portable de localisation selon la Revendication 1, dans lequel le deuxième axe principal du deuxième récepteur directionnel se trouve dans une position opposée par rapport au troisième axe principal du troisième récepteur directionnel.

3. Dispositif portable de localisation selon l'une des revendications précédentes, dans lequel chacun des trois récepteurs directionnels est relié à un transducteur d'intensité, chaque transducteur d'intensité étant configuré de manière à vérifier l'intensité du signal reçu par le récepteur directionnel qui y est relié, et l'unité de traitement comprenant une unité de détermination de localisation reliée aux transducteurs d'intensité pour déterminer la propriété de localisation de l'objet, sur la base d'une ou de plusieurs intensité(s) des transducteurs d'intensité.

4. Dispositif portable de localisation selon l'une des revendications précédentes, dans lequel l'unité de traitement est reliée à un dispositif de lecture de manière à indiquer la propriété de localisation de l'objet à un utilisateur.

5. Dispositif portable de localisation selon l'une des revendications précédentes, dans lequel la propriété de localisation comprend la direction, et/ou dans lequel la propriété de localisation comprend la distance relative.

6. Dispositif portable de localisation selon l'une des revendications précédentes, dans lequel le dispositif de localisation comprend un élément de détermination de position pour déterminer une position du dispositif de localisation.

7. Système d'un dispositif portable de localisation selon l'une des revendications précédentes, et d'un objet, dans lequel l'objet est équipé d'un circuit électrique, comprenant un élément de transmission qui peut être relié à un élément d'alimentation, de manière à émettre un signal, le dispositif de localisation étant configuré pour recevoir le signal émis par l'objet.

8. Système selon la Revendication 7, dans lequel le circuit électrique comprend une unité de modulation de manière à traiter un ou plusieurs éléments de données dans le signal émis par l'élément de transmission, et dans lequel l'unité de traitement du dispositif portable de localisation est configuré pour déduire un ou plusieurs des éléments de données traités dans le signal, d'un signal reçu.

9. Système selon la Revendication 8, dans lequel l'objet comprend un élément de détermination de position relié à l'unité de modulation, de manière à déterminer une position de l'objet, l'objet étant configuré pour émettre des données sur la position déterminée de l'objet avec le signal.

10. Système selon la Revendication 8 ou 9, dans lequel les données comprennent un code d'identification unique à l'objet, et dans lequel le dispositif portable de localisation est sélectivement réglable pour traiter le signal comprenant le code d'identification unique.

11. Système selon l'une des Revendications 8 - 10 précédentes, dans lequel le système comprend au moins un second objet qui est équipé d'un circuit électrique, comprenant un élément de transmission qui peut être relié à un élément d'alimentation, de manière à émettre un second signal, le dispositif portable de localisation étant configuré pour recevoir le second signal émis par le au moins second objet, ainsi que pour obtenir une propriété de localisation du second objet.

12. Système selon l'une des Revendications 8 - 11 précédentes, dans lequel l'objet est une balle de golf et le circuit électrique comprend, en outre, un élément de commutation pour activer ou désactiver le circuit, lequel élément de commutation comprend un capteur de mouvement pour détecter un mouvement de la balle de golf, et dans lequel l'élément de commutation est configuré pour activer le circuit lors de la détection du mouvement de la balle de golf pour amener l'élément de transmission à émettre un signal, et pour désactiver le circuit après une période de temps spécifiée, après activation, de manière à économiser l'élément d'alimentation.

13. Système selon la Revendication 12, dans lequel le capteur de mouvement comprend un capteur de force et/ou un détecteur d'impact, de manière à détecter une frappe sur la balle de golf.
